# EUROPÄISCHE PATENTSCHRIFT

(11) **EP 3 266 308 B1**
(45) Veröffentlichungstag und Bekanntmachung des Hinweises auf die Patenterteilung: **29.12.2021**
(21) Anmeldenummer: 17175565.5
(22) Anmeldetag: 12.06.2017
(51) Int. Cl.: A22B 5/00, A22C 17/00

(54) **RIPPENSCHÄLGERÄT MIT EINEM AUSBALANCIERTEN KLINGENHALTER**
FIN PEELING TOOL WITH A BALANCED BLADE HOLDER
APPAREIL DESTINÉ À RABOTER DES NERVURES ÉQUIPÉ D'UN PORTE-LAME ÉQUILIBRÉ

(30) Priorität: 08.07.2016 DE 102016112616
(43) Veröffentlichungstag der Anmeldung: 10.01.2018
(73) Patentinhaber: BIAX Maschinen GmbH, 8212 Neuhausen am Rheinfall (CH)
(72) Erfinder: Baumann, Marco, 78239 Worblingen (DE)
(74) Vertreter: DREISS Patentanwälte PartG mbB

(56) Entgegenhaltungen:
- EP-A1- 1 232 839
- EP-A1- 2 243 581
- WO-A1-99/20424
- DE-A1-102010 013 626
- DE-U1- 8 908 775

## Beschreibung

Die vorliegende Erfindung betrifft ein Rippenschälgerät nach dem Oberbegriff des Anspruchs 1.

Ein solches Gerät ist vom Markt her bekannt und weist einen mit Druckluft als Antriebsmedium betriebenen Linear-Schwingantrieb auf, der eine Kolbenstange aufweist, die in dem Rippenschälgerät längs einer in Bezug auf das Rippenschälgerät ortsfesten Richtung beweglich geführt ist. Die DE 10 2010 013 626 A1 zeigt ebenfalls ein Rippenschälgerät. Die DE 89 08 775 U1 zeigt ein Druckluftmesser. Ein Handwerkzeug mit einem Linear-Schwingantrieb ist auch aus der EP 2 243 581 A1 der Anmelderin bekannt.

Bei dem vom Markt her bekannten Gerät ist die Kolbenstange mit einem durch Druckluft antreibbaren Kolben verbunden und in einem Motorgehäuse verschiebbar gelagert. Auf die Kolbenstange wird eine Antriebskraft mit einer in Bezug auf das Rippenschälgerät ortsfesten Wirkungslinie übertragen. Die Kraftrichtung kehrt sich periodisch um, so dass sich eine oszillierende Translationsbewegung ergibt.

Das Gerät weist darüber hinaus einen Verbund aus einer Klinge und Klingenhalter auf, der ein proximales Ende und ein distales Ende aufweist. Das proximale Ende des Klingenhalters ist lösbar mit dem Antriebselement verbunden, und das distale Ende des Klingenhalters ist lösbar mit der Klinge verbunden. Die Klinge ist U-förmig gebogen und wird in Fleisch verarbeitenden Betrieben zum Herauslösen von Rippen aus Schlachtfleisch verwendet.

Bei dem bekannten Gerät ist ein hoher Verschleiß der Lagerung des Klingenhalters beobachtet worden. Ferner sind bei dem bekannten Gerät deutliche Vibrationen beobachtet worden. Vibrationen beeinträchtigen die Standzeit des Werkzeuges und können an hoch belasteten Stellen zu Ermüdungsbrüchen führen. Außerdem können die Vibrationen dazu führen, dass sich Schrauben lösen, zum Beispiel die Schrauben, mit denen die Klinge befestigt ist. Es hat sich außerdem gezeigt, dass bei der Handhabung des bekannten Geräts eine schnelle Ermüdung des Bedieners eintritt.

Die Aufgabe der Erfindung besteht daher darin, ein Rippenschälgerät zu entwickeln, bei dem ein solcher Verschleiß und derartige Vibrationen, wirksam vermieden werden und das nicht zu einer vorschnellen Ermüdung eines Bedieners führt.

Diese Aufgabe wird durch ein Rippenschälgerät mit den Merkmalen des Anspruchs 1 gelöst. Die kennzeichnenden Merkmale des Anspruchs 1 definieren das erfindungsgemäße Rippenschälgerät dadurch, dass der Schwerpunkt des Verbundes aus Klingenhalter und Klinge in einer Flucht mit der in Bezug auf das Rippenschälgerät ortsfesten Wirkungslinie liegt.

Die Erfindung basiert auf der Erkenntnis, dass die beim Stand der Technik auftretenden Vibrationen und der Verschleiß dadurch bedingt sind, dass der Schwerpunkt des Verbundes aus Klingenhalter und Klinge dort außerhalb der Wirkungslinie der antreibenden Kraft liegt, so dass die antreibende Kraft dort zusätzlich ein die Lagerung des Klingenhalters und der Kolbenstange in der quer zur Richtung der Antriebskraft liegenden Richtung belastendes Drehmoment oder Kippmoment erzeugt. Es wurde auch erkannt, dass die Erschwerung der Handhabung und die schnelle Ermüdbarkeit des Bedieners aus einer Übertragung der Kippmomente auf den Bediener und insbesondere auf dessen Hand-Arm-System resultieren.

Durch die Erfindung ist sichergestellt, dass der Schwerpunkt des im Betrieb des Rippenschälgerätes oszillierenden Klingenhalters mit montierter Klinge durch den Linearschwingantrieb nur translatorisch wirksame Kräfte erfährt.

Weitere Vorteile ergeben sich aus den abhängigen Ansprüchen, der Beschreibung und den beigefügten Figuren.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: einen Längsschnitt eines Ausführungsbeispiels eines erfindungsgemäßen Rippenschälgeräts;
- Figur 2: einen Klingenhalter mit Klinge und Klemmschelle in einer Schrägansicht;
- Figur 3: den Klingenhalter mit erster Führungshülse, Klemmschelle und Klinge in einer Seitenansicht;
- Figur 4: eine Vorderansicht einer zweiten Führungshülse; und
- Figur 5: eine Ansicht des proximalen Endes des Klingenhalters mit Klinge, erster Führungshülse und zweiter Führungshülse.

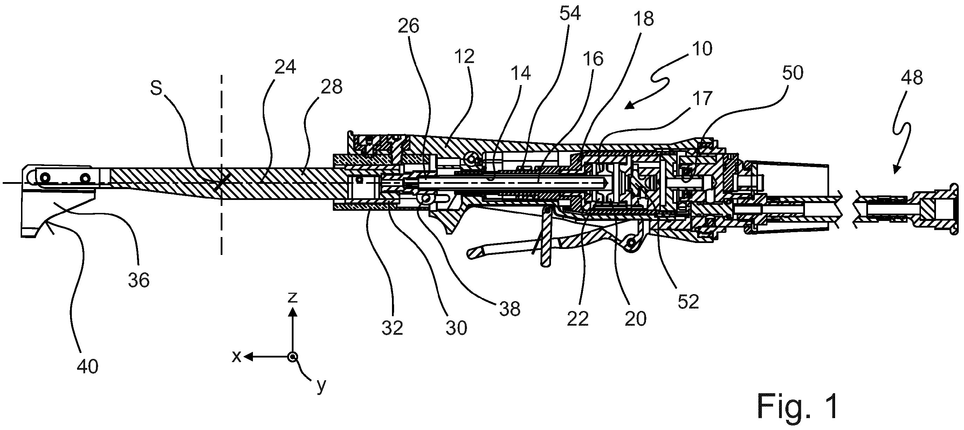

Im Einzelnen zeigt die Figur 1 einen Längsschnitt eines Ausführungsbeispiels eines erfindungsgemäßen Rippenschälgeräts 10 mit einem Griffkörper 12 und einer Kolbenstange 14, die entlang einer Achse 16 beweglich in dem Griffkörper 12 gelagert ist.

Die Kolbenstange 14 ist starr mit einem Kolben 17 verbunden, der in einem Motorengehäuse 18 innerhalb des Griffkörpers 12 in Richtung der Achse 16 beweglich gelagert ist und der einen ersten Arbeitsraum 20 von einem zweiten Arbeitsraum 22 des Motorengehäuses 18 beweglich voneinander trennt. Jeder der beiden Arbeitsräume 20, 22 wird für sich betrachtet abwechselnd mit Druckluft befüllt und entlüftet, wobei die Befüllung beider Arbeitsräume 20, 22 jeweils im Wechsel zueinander erfolgt.

Bei einer Befüllung des ersten Arbeitsraums 20 ergibt sich eine resultierende Druckkraft auf den Kolben (17), mit der die Kolbenstange 14 aus dem Griffkörper 12 heraus getrieben wird. Bei einer Befüllung des zweiten Arbeitsraums 22 mit Druckluft wird die Kolbenstange 14 dagegen in den Griffkörper hinein gezogen. Das Motorengehäuse 18 mit dem unter dem Einfluss der Druckluft hin und her laufenden Kolben 17 und der damit starr gekoppelten Kolbenstange 14 stellt damit einen Linear-Schwingantrieb dar. Die Achse 16 ist bevorzugt eine Symmetrieachse der bevorzugt rotationssymmetrischen Kolbenstange 14.

Die Figur 1 zeigt damit insbesondere ein Rippenschälgerät 10 mit einer Kolbenstange 14, die in dem Rippenschälgerät 10 längs einer in Bezug auf das Rippenschälgerät 10 ortsfesten Richtung, nämlich der Richtung der Achse 16, beweglich geführt ist. Figur 1 zeigt ferner einen Linearschwingantrieb, der eine Antriebskraft mit einer in Bezug auf das Rippenschälgerät 10 ortsfesten Wirkungslinie 24 auf die Kolbenstange 14 ausübt, deren Richtung sich periodisch umkehrt. Die Wirkungslinie 24 fällt dabei in dem dargestellten Ausführungsbeispiel mit der Rotationssymmetrieachse 16 der Kolbenstange 14 zusammen.

Ein aus dem Motorgehäuse herausragendes distales Ende 26 der Kolbenstange 14 dient zur Befestigung eines Klingenhalters 28. Bei betriebsbereitem Gerät ist ein proximales Ende des Klingenhalters 28 mit dem distalen Ende 26 der Kolbenstange 14 mit einer Klemmhülse 38 kraftschlüssig und lösbar verbunden.

Der Klingenhalter 28 weist an seinem proximalen Ende eine auswechselbare erste Führungshülse 30 auf. Das Griffstück 12 weist an seinem den Klingenhalter 28 aufnehmenden Ende eine auswechselbare weitere Führungshülse 32 auf, die in dem Griffstück 12 feststehend, aber lösbar befestigt ist.

Die lösbare Befestigung erfolgt zum Beispiel mit einer Schraube, die durch eine Wand des Griffstücks 12 hindurch in ein Gewinde der weiteren Führungshülse 32 eingreift und die weitere Führungshülse 32 mit der Wand verspannt. Die Innenfläche der weiteren Führungshülse 32 bildet eine Lagerfläche, in der die äußere Fläche der ersten, mit dem Klingenhalter 28 verbundenen Führungshülse 30 translatorisch verschiebbar gelagert und dabei in quer zu der Translationsrichtung weisenden Richtungen abgestützt wird.

Der Klingenhalter 28 weist an seinem distalen Ende eine lösbar befestigte Klinge 36 auf. Die lösbare Befestigung erfolgt bevorzugt durch Schrauben.

Der Verbund aus dem Klingenhalter 28 und der Klinge 36 zeichnet sich dadurch aus, dass der Schwerpunkt S des Verbundes aus Klingenhalter 28 und Klinge 36 in einer Flucht mit der in Bezug auf das Rippenschälgerät 10 ortsfesten Wirkungslinie 24 liegt, die mit der Symmetrieachse 16 der Rotationssymmetrie der Kolbenstange 14 zusammenfällt. Man kann die Wirkungslinie 24 gedanklich als Normale einer gedachten Fläche betrachten, die bei den in der Figur 1 angegebenen Richtungen parallel zur y-z-Ebene (also quer zur Zeichnungsebene) liegt, und deren Ursprung mit ihrem Schnittpunkt mit der Wirkungslinie 24 zusammenfällt. Dann soll auch der Schwerpunkt S des Verbundes aus Klingenhalter 28 und Klinge 36 in diesem Schnittpunkt liegen. Der Klingenhalter 28 soll dabei auch die Klemmhülse 38 und die erste Führungshülse 30 mit umfassen, weil diese zu den translatorisch oszillierend bewegten Teilen zählen.

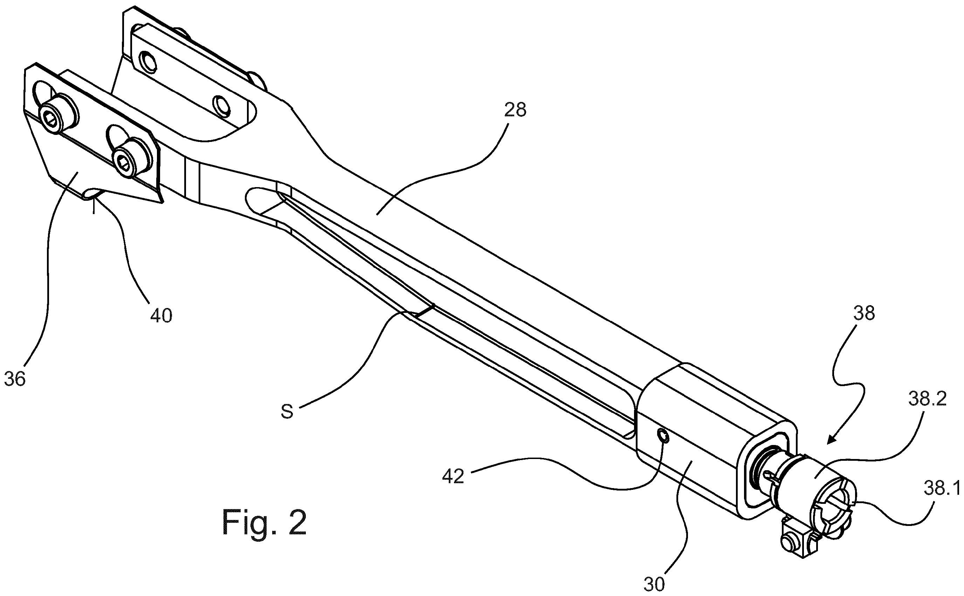

Figur 2 zeigt den Klingenhalter 28 mit Klinge 36 und Klemmhülse 38 in einer Schrägansicht. An seinem distalen Ende ist der Klingenhalter U-förmig, beziehungsweise gabelförmig ausgeführt. Die Schenkel der U-Form dienen zur Befestigung einer gebogenen Klinge 36, die den Abstand der beiden U-Schenkel bogenförmig überspannt und deren Schneidkante 40 dem Griffstück 12 zugewandt ist. Das Gerät 10 ist daher für eine ziehende Schneidbewegung eingerichtet.

Der Klingenhalter 28 weist an seinem proximalen Ende die bereits genannte erste Führungshülse 30 auf. Diese erste Führungshülse 30 ist bevorzugt formschlüssig auf das proximale Ende des Klingenhalters 28 aufsteckbar. Die erste Führungshülse 30 ist bevorzugt mit einem Spannstift 42 an dem Klingenhalter 28 fixierbar. Die erste Führungshülse 30 gleitet im Betrieb des Gerätes 10 in der weiteren Führungshülse 32 hin und her und dient damit der Lagerung und der Führung der oszillierenden Translationsbewegung des Klingenhalters 28. Die erste Führungshülse 30 ist damit ein vom Klingenhalter 28 separierbares und im Verschleißfall auswechselbares Bauteil. Es besteht bevorzugt aus einem bezüglich der erforderlichen Hygiene beständigen, zur Gleitlagerung geeigneten Kunststoff.

Darüber hinaus weist der Klingenhalter 28 eine formschlüssig mit seinem proximalen Ende verbundene Klemmhülse 38 mit Klemmschelle 38.2 auf. Diese Klemmhülse 38 dient zur lösbaren Verbindung des Klingenhalters 28 mit dem distalen Ende 26 der Kolbenstange 14. In einer bevorzugten Ausgestaltung weist der Klingenhalter 28 an seinem proximalen Ende ein sich in Richtung der Translationsbewegung erstreckendes, mit einem Innengewinde versehenes Sackloch auf, das zur formschlüssigen Aufnahme und Befestigung der Klemmhülse 38 dient. Die Klemmhülse 38 weist ein mit einem dazu passenden Außengewinde versehenes erstes Ende und ein dem ersten Ende abgewandt gegenüberliegendes zweites Ende auf, das als Klemmschelle 38.2 ausgestaltet ist. Die Klemmhülse 38 weist sich in radialer Richtung erstreckende und über ihren Umfang verteilt angeordnete Einschnitte 38.1 auf. Die lichte Weite der Klemmhülse 38 entspricht dem Außendurchmesser des distalen Endes der Kolbenstange 14 und nimmt das distale Ende 26 der Kolbenstange 14 im betriebsbereit montierten Zustand des Gerätes 10 auf. Eine den Umfang der Klemmhülse 38 im Bereich der Einschnitte 38.1 umfassende und mit einer Spannschraube versehene Klemmschelle 38.2 dient zum kraftschlüssigen Verspannen des distalen Endes 26 der Kolbenstange 14 in der Klemmhülse 38.

Zwischen seinem distalen Ende und seinem proximalen Ende besitzt der Klingenhalter 28 bevorzugt ein Doppel-T-Profil. Dadurch ergibt sich ein für die Handhabung erwünschtes geringes Gesamtgewicht bei gleichzeitig höchster Steifigkeit, was für eine lange Einsatzlebensdauer des Klingenhalters 28 günstig ist.

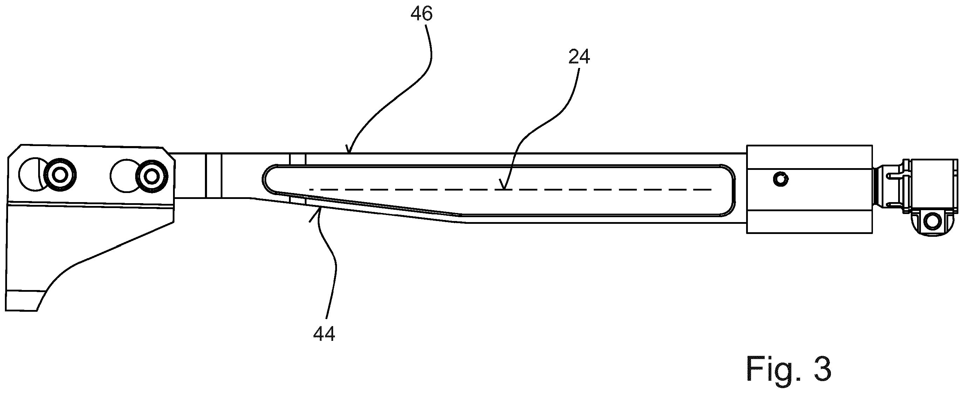

Figur 3 zeigt den Klingenhalter 28 mit erster Führungshülse 30, Klemmhülse 38 und Klinge 36 in einer Seitenansicht. Der Schwerpunkt S des mit diesen Elementen verbundenen Klingenhalters 28 liegt in der Wirkungslinie 24 in Figur 1. Der Klingenhalter 28 weist eine der Klinge 36 zugewandte erste Seite 44 (vergleiche Figur 3) und eine der ersten Seite 44 abgewandt gegenüberliegende zweite Seite 46 auf. Mit zunehmendem Abstand von seinem dem Griffstück 12 zugewandten, proximalen Ende nimmt der Abstand zwischen der ersten Seite 44 und der Wirkungslinie 24 ab. Dies gewährleistet einen für die Verwendung als Rippenschälgerät ausreichenden Freiraum oder Durchlaufquerschnitt zwischen Klinge und Klingenhalter für die Rippen.

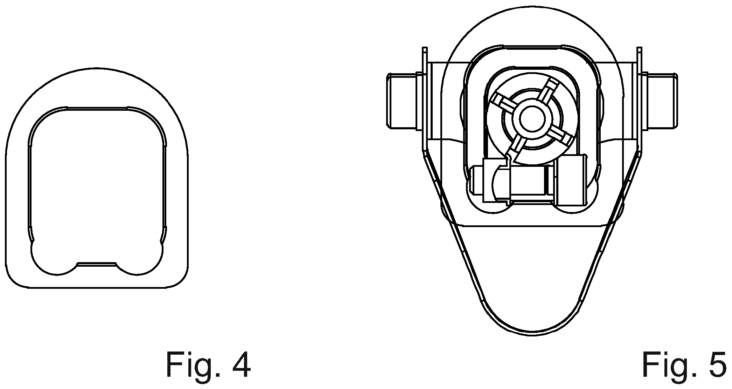

Figur 4 zeigt eine Vorderansicht der zweiten Führungshülse 32 mit der zur Aufnahme der ersten Führungshülse dienenden lichten Weite. Der Querschnitt entspricht in erster Näherung einem Rechteck mit abgerundeten Ecken. Die in der Figur 4 unten liegenden Freinuten erlauben ein Durchschieben der quer zur Öffnung liegenden Klemmschraube sowie der Klemmschelle.

Figur 5 zeigt eine Ansicht des Klingenhalters mit Klinge, erster Führungshülse und zweiter Führungshülse aus einer Blickrichtung, die der x-Richtung in der Figur 1 entspricht.

Im Folgenden wird erneut auf die Figur 1 Bezug genommen. Das Rippenschälgerät 10 weist einen Druckluftanschluss mit einem Druckluftsteuerventil auf, mit dem ein Strom von Druckluft in die Arbeitsräume 20, 22 steuerbar ist. Das Druckluftsteuerventil wird von einem Betätigungsmittel des Handwerkzeuges 10 betätigt. Das Betätigungsmittel ist in dem dargestellten Ausführungsbeispiel ein manuell zu betätigender Kniehebel.

Die Druckluft tritt über den Druckluftanschluss 48 des Geräts 10 und ein Druckluftanschlussstück 50 des Motorengehäuses 18 in das Motorengehäuse 18 ein und strömt je nach Stellung eines Steuerschiebers 52 entweder in den ersten Arbeitsraum 20 oder in den zweiten Arbeitsraum 22. Der Kolben 17 weist sowohl ein zu dem ersten Arbeitsraum 20 weisendes erstes Kolbenhemd als auch ein zu dem zweiten Arbeitsraum 22 weisendes zweites Kolbenhemd auf.

Das Motorengehäuse 18 ist in dem Griffkörper 12 des Geräts 10 in der Bewegungsrichtung des Kolbens 17 elastisch beweglich gelagert. Diese Art der Lagerung erlaubt eine gegenphasig zur Schwingung des Kolbens 17 erfolgende Schwingung des Motorengehäuses 18, was zu einer erwünschten Tilgung der Massenkräfte beiträgt.

Auf den Querschnitt des Druckanschlussstücks 50 innerhalb seiner Führung wirkt eine Druckkraft, die das Motorengehäuse 18 gegen die Kraft eines elastischen Rückstellelements, beispielsweise einer in der Figur 1 dargestellten Spiralfeder 54, auslenkt. Diesen Kräften überlagern sich noch die Druckkräfte innerhalb der Arbeitsräume 20, 22. Diese Druckkräfte treiben das Motorengehäuse 18 jeweils in zur Richtung der Kolbenantriebskraft entgegengesetzten Richtung an. Als erwünschte Folge bewegen sich Motorengehäuse 18 und Kolben 17 gegenphasig, was bereits zu einer guten Schwingungstilgung und damit Handhabbarkeit des gesamten Rippenschälgeräts 10 führt.

Jedes Kolbenhemd bildet mit dem zugehörigen Kolbenboden einen Kolbentopf so dass der Kolben insgesamt zwei starr miteinander verbundene und zu entgegengesetzten Seiten geöffnete Kolbentöpfe aufweist.

Jeder Kolbentopf weist einen zylinderförmigen Mantel in Form seines Kolbenhemdes einen Topfboden und eine dem Topfboden gegenüberliegende Topföffnung auf. Die Topfböden beider Kolbentöpfe weisen einen festen Abstand voneinander auf und sind zwischen den Topföffnungen angeordnet, so dass sich die Kolbentöpfe in entgegengesetzte Richtungen öffnen.

## Patentansprüche

1. Rippenschälgerät (10) mit einem Linear-Schwingantrieb, der eine Kolbenstange (14) aufweist, die in dem Rippenschälgerät (10) längs einer in Bezug auf das Rippenschälgerät (10) ortsfesten Richtung beweglich geführt ist, und der eine Antriebskraft mit einer in Bezug auf das Rippenschälgerät (10) ortsfesten Wirkungslinie (24) auf die Kolbenstange (14) ausübt, deren Richtung sich periodisch umkehrt, und mit einem Verbund aus einer Klinge (36) und einem ein proximales Ende und ein distales Ende (26) aufweisenden Klingenhalter (28), dessen proximales Ende lösbar mit der Kolbenstange (14) verbunden ist und dessen distales Ende (26) lösbar mit der Klinge (36) verbunden ist, **dadurch gekennzeichnet, dass** der Schwerpunkt des Verbundes aus Klingenhalter (28) und Klinge (36) in einer Flucht mit der in Bezug auf das Rippenschälgerät (10) ortsfesten Wirkungslinie (24) liegt.

2. Rippenschälgerät (10) nach Anspruch 1, **dadurch gekennzeichnet, dass** ein aus einem Motorgehäuse (18) herausragendes distales Ende (26) der Kolbenstange (14) zur Befestigung des Klingenhalters (28) dient.

3. Rippenschälgerät (10) nach einem der vorhergehenden Ansprüche, **dadurch gekennzeichnet, dass** das proximale Ende des Klingenhalters (28) bei betriebsbereitem Gerät (10) mit dem distalen Ende (26) der Kolbenstange (14) über eine Klemmhülse (38) kraftschlüssig und lösbar verbunden ist.

4. Rippenschälgerät (10) nach einem der vorhergehenden Ansprüche, **dadurch gekennzeichnet, dass** der Klingenhalter (28) an seinem proximalen Ende eine erste auswechselbare Führungshülse (30) aufweist.

5. Rippenschälgerät (10) nach dem vorhergehenden Anspruch, **dadurch gekennzeichnet, dass** die erste Führungshülse (30) ein vom Klingenhalter (28) separierbares und im Verschleißfall auswechselbares Bauteil ist.

6. Rippenschälgerät (10) nach dem vorhergehenden Anspruch, **dadurch gekennzeichnet, dass** die erste Führungshülse (30) aus einem bezüglich der erforderlichen Hygiene beständigen, zur Gleitlagerung geeigneten Kunststoff besteht.

7. Rippenschälgerät (10) nach dem vorhergehenden Anspruch, **dadurch gekennzeichnet, dass** ein Griffstück (12) des Rippenschälgeräts (10) an seinem den Klingenhalter (28) aufnehmenden Ende eine auswechselbare weitere Führungshülse (32) aufweist, die in dem Griffstück (12) feststehend, aber lösbar befestigt ist.

8. Rippenschälgerät (10) nach dem vorhergehenden Anspruch, **dadurch gekennzeichnet, dass** die Innenfläche der weiteren Führungshülse (32) eine Lagerfläche bildet, in der die äußere Fläche der ersten, mit dem Klingenhalter (28) verbundenen Führungshülse (30) translatorisch verschiebbar gelagert und dabei in quer zu der Translationsrichtung weisenden Richtungen abgestützt wird.

9. Rippenschälgerät (10) nach dem vorhergehenden Anspruch, **dadurch gekennzeichnet, dass** die erste Führungshülse (30) formschlüssig auf das proximale Ende des Klingenhalters (28) aufsteckbar ist, mit einem Spannstift (42) an dem Klingenhalter (28) fixierbar ist, im Betrieb des Gerätes (10) in der weiteren Führungshülse (32) hin und her gleitet und damit der Lagerung und der Führung der oszillierenden Translationsbewegung des Klingenhalters (28) dient.

10. Rippenschälgerät (10) nach dem vorhergehenden Anspruch, **dadurch gekennzeichnet, dass** die Kolbenstange (14) eine Rotationssymmetrieachse (26) aufweist, die zwischen dem Kolben (17) und dem distalen Ende (26) der Kolbenstange (14) verläuft und dass die in Bezug auf das Rippenschälgerät (10) ortsfeste Wirkungslinie (24) mit der Rotationssymmetrieachse (26) der Rotationssymmetrie der Kolbenstange (14) zusammenfällt.

11. Rippenschälgerät (10) nach einem der vorhergehenden Ansprüche, **dadurch gekennzeichnet, dass** der Klingenhalter (28) an seinem distalen Ende U-förmig, beziehungsweise gabelförmig ausgeführt ist, wobei die Schenkel der U-Form zur Befestigung einer gebogenen Klinge (36) dienen, die den Abstand der beiden U-Schenkel bogenförmig überspannt und deren Schneidkante (40) dem Griffstück (12) zugewandt ist.

12. Rippenschälgerät (10) nach einem der vorhergehenden Ansprüche, **dadurch gekennzeichnet, dass** der Klingenhalter (28) eine formschlüssig mit seinem proximalen Ende verbundene Klemmhülse (38) aufweist.

13. Rippenschälgerät (10) nach einem der vorhergehenden Ansprüche, **dadurch gekennzeichnet, dass** der Klingenhalter (28) zwischen seinem distalen Ende und seinem proximalen Ende ein Doppel-T-Profil besitzt.

14. Rippenschälgerät (10) nach einem der vorhergehenden Ansprüche, **dadurch gekennzeichnet, dass** der Klingenhalter (28) eine der Klinge (36) zugewandte erste Seite (44) und eine der ersten Seite (44) abgewandt gegenüberliegende zweite Seite (46) aufweist und dass ein Abstand zwischen der ersten Seite (44) und der Wirkungslinie (24) mit zunehmendem Abstand von dem dem Griffstück (12) zugewandten, proximalen Ende des Klingenhalters (28) abnimmt.

15. Rippenschälgerät (10) nach einem der vorhergehenden Ansprüche, **dadurch gekennzeichnet, dass** der Querschnitt einer zur Aufnahme der ersten Führungshülse (30) dienenden lichten Weite der zweiten Führungshülse (32) ein Rechteck mit abgerundeten Ecken ist.

## Claims

1. Rib skiving device (10) with an oscillating linear drive comprising a piston rod (14) which is movably guided in the rib skiving device (10) along a fixed direction relative to the rib skiving device (10), and exerting a drive force on the piston rod (14) with a line of action (24) fixed relative to the rib skiving device (10), the direction of which is periodically reversed, and with a combination of a blade (36) and a blade support (28) comprising a proximal end and a distal end, the proximal end of the support being connected to the piston rod (14) and the distal end (26) thereof being detachably connected to the blade (36), **characterized in that** the center of gravity of the combination of blade support (28) and blade (36) is in alignment with the line of action (24) fixed relative to the rib skiving device (10).

2. Rib skiving device (10) as claimed in claim 1, **characterized in that** a distal end (26) on the piston rod (14) protruding from a motor housing (18) is used for mounting the blade support (28).

3. Rib skiving device (10) as claimed in one of the preceding claims, **characterized in that** the proximal end of the blade support (28) is connected to the distal end (26) of the piston rod (14) by means of a clamping sleeve (38) in a force-fit and detachably when the device is ready for operation.

4. Rib skiving device (10) as claimed in one of the preceding claims, **characterized in that** the blade support (28) comprises a first exchangeable guide bushing (30) at its proximal end.

5. Rib skiving device (10) as claimed in the preceding claim, **characterized in that** the first guide bushing (30) is a component separable from the blade support (28) and which can be exchanged when worn.

6. Rib skiving device (10) as claimed in the preceding claim, **characterized in that** the first guide bushing (30) consists of a plastic suitable for sliding contact bearing and resistant with respect to the necessary hygienics.

7. Rib skiving device (10) as claimed in the preceding claim, **characterized in that** a handle piece (12) of the rib skiving device (10) comprises an exchangeable further guide bushing (32) at its end receiving the blade support (28), which is mounted in the handle piece (12) in a fixed but detachable manner.

8. Rib skiving device (10) as claimed in the preceding claim, **characterized in that** the inner surface of the further guide bushing (32) forms a bearing surface in which the outer surface of the first guide bushing (30), which is connected to the blade support (28), is born translatory movable while being supported in directions extending transversely to the direction of translation.

9. Rib skiving device (10) as claimed in the preceding claim, **characterized in that** the first guide bushing (30) can be slipped onto the proximal end of the blade support (28) in a positive fit, can be fixed on the blade support (28) with a locking pin (42), slides back and forth in the further guide bushing (32) when the device (10) is in operation and thus serves as bearing support and guiding for the oscillating translatory movement of the blade support (28).

10. Rib skiving device (10) as claimed in the preceding claim, **characterized in that** the piston rod (14) has an axis of rotational symmetry (26) which extends between the piston (17) and the distal end (26) of the piston rod (14), and that the line of action (24) fixed relative to the rib skiving device (10) coincides with the axis of rotational symmetry (26) of the rotational symmetry of the piston rod (14).

11. Rib skiving device (10) as claimed in one of the preceding claims, **characterized in that** the blade support (28) is configured U-shaped or fork-shaped at its distal end, wherein the legs of the U-shape serve for attaching a curved blade (36) which spans the distance of the two legs of U in an arc, the cutting-edge (40) of which facing the handle piece (12).

12. Rib skiving device (10) as claimed in one of the preceding claims, **characterized in that** the blade support (28) comprises a clamping sleeve (38) connected to its proximal end in a positive fit.

13. Rib skiving device (10) as claimed in one of the preceding claims, **characterized in that** the blade support (28) has a double-T-profile between its distal end and its proximal end.

14. Rib skiving device (10) as claimed in one of the preceding claims, **characterized in that** the blade support (20) comprises a first side (44) facing the blade (36) and an opposite second side (46) facing away from the first side (44), and that a distance between the first side (44) and the line of action (24) decreases with an increasing distance from the proximal end of the blade support (28) facing that handle piece (12).

15. Rib skiving device (10) as claimed in one of the preceding claims, **characterized in that** the cross-section of the clear width of the second guide bushing (32) serving for receiving the first guide bushing (30) is a rectangle with rounded corners.

## Revendications

1. Appareil pour peler les os des côtes (10) avec un entraînement vibrant linéaire, qui présente une tige de piston (14), qui est guidée mobile dans l'appareil pour peler les os des côtes (10) le long d'une direction fixée à demeure par rapport à l'appareil pour peler les os des côtes (10), et qui exerce une force d'entraînement avec une ligne d'action (24) fixée à demeure par rapport à l'appareil pour peler les os des côtes (10) sur la tige de piston (14), dont la direction s'inverse périodiquement, et avec un ensemble composé d'une lame (36) et d'un porte-lame (28) présentant une extrémité proximale et une extrémité distale (26), dont l'extrémité proximale est reliée de manière détachable à la tige de piston (14) et dont l'extrémité distale (26) est reliée de manière détachable à la lame (36), **caractérisé en ce que** le centre de gravité de l'ensemble composé du porte-lame (28) et de la lame (36) se situe en alignement avec la ligne d'action (24) fixée à demeure par rapport à l'appareil pour peler les os des côtes (10) .

2. Appareil pour peler les os des côtes (10) selon la revendication 1, **caractérisé en ce qu'**une extrémité distale (26) de la tige de piston (14) faisant saillie d'un carter de moteur (18) sert à la fixation du porte-lame (28).

3. Appareil pour peler les os des côtes (10) selon l'une quelconque des revendications précédentes, **caractérisé en ce que** l'extrémité proximale du porte-lame (28) lorsque l'appareil (10) est prêt à fonctionner est reliée à force et de manière détachable à l'extrémité distale (26) de la tige de piston (14) par l'intermédiaire d'un manchon de serrage (38).

4. Appareil pour peler les os des côtes (10) selon l'une quelconque des revendications précédentes, **caractérisé en ce que** le porte-lame (28) présente au niveau de son extrémité proximale un premier manchon de guidage (30) interchangeable.

5. Appareil pour peler les os des côtes (10) selon la revendication précédente, **caractérisé en ce que** le premier manchon de guidage (30) est une pièce pouvant être séparée du porte-lame (28) et interchangeable en cas d'usure.

6. Appareil pour peler les os des côtes (10) selon la revendication précédente, **caractérisé en ce que** le premier manchon de guidage (30) est constitué d'un plastique résistant en ce qui concerne l'hygiène nécessaire, adapté au support glissant.

7. Appareil pour peler les os des côtes (10) selon la revendication précédente, **caractérisé en ce qu'**une poignée (12) de l'appareil pour peler les os des côtes (10) présente au niveau de son extrémité recevant le porte-lame (28) un autre manchon de guidage (32) interchangeable, qui est fixé dans la poignée (12) de manière fixe, mais détachable.

8. Appareil pour peler les os des côtes (10) selon la revendication précédente, **caractérisé en ce que** la surface intérieure de l'autre manchon de guidage (32) forme une surface d'appui, dans laquelle la surface extérieure du premier manchon de guidage (30) relié au porte-lame (28) est montée coulissante en translation et ce faisant soutenue dans des directions orientées transversalement par rapport à la direction de translation.

9. Appareil pour peler les os des côtes (10) selon la revendication précédente, **caractérisé en ce que** le premier manchon de guidage (30) peut être emboîté par coopération de formes sur l'extrémité proximale du porte-lame (28), peut être fixé avec une goupille de serrage (42) sur le porte-lame (28), glisse en va-et-vient dans l'autre manchon de guidage (32) lors du fonctionnement de l'appareil (10) et ainsi sert au support et au guidage du mouvement de translation oscillant du porte-lame (28).

10. Appareil pour peler les os des côtes (10) selon la revendication précédente, **caractérisé en ce que** la tige de piston (14) présente un axe de symétrie de rotation (26), qui s'étend entre le piston (17) et l'extrémité distale (26) de la tige de piston (14) et que la ligne d'action (24) fixée à demeure par rapport à l'appareil pour peler les os des côtes (10) coïncide avec l'axe de symétrie de rotation (26) de la symétrie de rotation de la tige de piston (14).

11. Appareil pour peler les os des côtes (10) selon l'une quelconque des revendications précédentes, **caractérisé en ce que** le porte-lame (28) est réalisé au niveau de son extrémité distale en forme de U, ou en forme de fourche, dans lequel les branches de la forme de U servent à la fixation d'une lame (36) courbe, qui recouvre de manière arquée la distance entre les deux branches du U et dont le bord de coupe (40) est tourné vers la poignée (12).

12. Appareil pour peler les os des côtes (10) selon l'une quelconque des revendications précédentes, **caractérisé en ce que** le porte-lame (28) présente un manchon de serrage (38) relié par coopération de formes à son extrémité proximale.

13. Appareil pour peler les os des côtes (10) selon l'une quelconque des revendications précédentes, **caractérisé en ce que** le porte-lame (28) possède entre son extrémité distale et son extrémité proximale un profil à double T.

14. Appareil pour peler les os des côtes (10) selon l'une quelconque des revendications précédentes, **caractérisé en ce que** le porte-lame (28) présente une première face (44) tournée vers la lame (36) et une deuxième face (46) opposée à la première face (44) et qu'une distance entre la première face (44) et la ligne d'action (24) diminue à mesure qu'augmente la distance par rapport à l'extrémité proximale du porte-lame (28) tournée vers la poignée (12).

15. Appareil pour peler les os des côtes (10) selon l'une quelconque des revendications précédentes, **caractérisé en ce que** la section transversale d'un diamètre intérieur du deuxième manchon de guidage (32) servant à la réception du premier manchon de guidage (30) est un rectangle aux coins arrondis.
